# EUROPEAN PATENT APPLICATION

(11) **EP 3 285 087 A1**
(43) Date of publication of application: **21.02.2018**
(21) Application number: 16184964.1
(22) Date of filing: 19.08.2016
(51) Int. Cl.: G01S 17/10, G01S 7/486, G01S 7/487

(54) **SENSOR ARRANGEMENT AND METHOD FOR DETERMINING TIME-OF-FLIGHT**

(71) Applicant: ams AG, 8141 Unterpremstätten (AT)
(72) Inventor: Glover, Kerry, Rockwall, TX 75087 (US); Mautner, Christian, 8072 Fernitz (AT)
(74) Representative: Epping - Hermann - Fischer

(57) **Abstract**

A sensor arrangement for determining a time-of-flight of electromagnetic radiation has an emitter (E) for emitting a plurality of sending pulses in response to respective trigger pulses of a control signal (C1), and a detector (MD) configured to detect received pulses. A measurement block (MB) determines respective differences representative of a time period between one of the sending pulses and one of the received pulses. A histogram block (HIST) accumulates the difference values in a histogram. A processing circuit (PRC) generates an output signal (OS) being indicative of the time-of-flight based on an evaluation of the histogram. The control signal (C1) is generated with a sequence of trigger pulses, wherein the sequence of trigger pulses comprises a first trigger pulse and a plurality of subsequent trigger pulses. For each of the subsequent trigger pulses, a time period between a respective preceding trigger pulse and this trigger pulse is different from a further time period between this trigger pulse and a respective succeeding trigger pulse.

## Description

The invention relates to the field of determining a time-of-flight of electromagnetic radiation. More specifically, the invention relates to a sensor arrangement and a method for determining a time-of-flight of electromagnetic radiation.

Time-of-flight sensors may have many applications related to distance measurement including for example proximity detection, assisting the autofocusing of digital cameras, multi-zone autofocus, gesture detection or 3D camera applications. A distance D between an object and the sensor may then be calculated as D = tof/(2c), where tof denotes the time-of-flight of electromagnetic radiation from the sensor to the object and back and c denotes the speed of light.

For determining the time-of-flight, pulses of electromagnetic radiation may be sent out and the reflections from an object may be detected. This technique can utilize multiple pulses over multiple periods to collect more data to improve the signal to noise ratio. This results in limiting the distance that is measured to the period of the repetition.

One of the challenging aspects of this technique is that in some situations, such as when the device is pointed at a mirror, a returned pulse may be from a distance longer than the repetition period. In such situations, the system will mistakenly report a distance shorter than the actual distance due to aliasing of the reflected signal into the next pulse period.

It is therefore an object to provide an improved concept for determining a time-of-flight of electromagnetic radiation with an increased accuracy.

This object is achieved by the subject matter of the independent claims. Further implementations and embodiments are the subject matter of the dependent claims.

The improved concept is based on the idea that when emitting multiple pulses of electromagnetic radiation towards an object, the time-of-flight for a reflected pulse will be the same as long as the object is within the maximum distance defined by the time period between successive pulses. In such situations no aliasing effects occur. While this constant time-of-flight is also true for objects with a larger distance with respect to the originally emitted pulse, the time period between a subsequent pulse and an aliased reflected pulse also depends on a time period between the originally emitted pulse and its succeeding emitted pulse. Hence, by varying the time period between subsequent emitted pulses, also the values for the aliased reflected pulses vary and can therefore be identified as unwanted aliased reflections. A time-of-flight measurement according to the improved concept therefore uses a variation in time periods between a plurality of emitted sending pulses of electromagnetic radiation and an evaluation of response times for attenuating aliased measurements. Hence the accuracy for a measurement according to the improved concept is increased.

An example implementation of a sensor arrangement according to the improved concept for determining a time-of-flight of electromagnetic radiation comprises an emitter configured to emit a plurality of sending pulses of electromagnetic radiation in response to respective triggers pulses of a control signal. A detector of the arrangement is configured to detect received pulses of electromagnetic radiation. For example, received pulses are reflected versions of the sending pulses. The sensor arrangement further has a measurement block configured to determine respective difference values representative of a time period between one of the sending pulses and one of the received pulses. For example, the time period is defined by a time difference between the time instant when the sending pulse is emitted and the time instant when the received pulse is detected.

A histogram block of the arrangement is configured to accumulate the difference values in a histogram. A processing circuit is configured to generate an output signal being indicative of the time-of-flight based on an evaluation of the histogram. The sensor arrangement further comprises a control unit configured to generate the control signal with a sequence of trigger pulses, wherein the sequence of trigger pulses comprises a first trigger pulse and a plurality of subsequent trigger pulses. Therein for each of the subsequent trigger pulses, a time period between a respective preceding trigger pulse and said trigger pulse is different from a further time period between said trigger pulse and a respective succeeding trigger pulse. For example, a clock period between one emitted pulse and the immediately succeeding pulse is varied for each emission of a sending pulse.

For varying the clock period, the spectrum of the emitted pulses can be spread as well as spreading the timing of the return pulse that is longer than a single period. This has the positive effect that the time-of-flight pulses can be anti-aliased. Furthermore, due to spreading of the spectrum, electromagnetic interference, EMI, can be reduced.

In other words, applying the improved concept reduces the incorrect detection of distances due to aliasing of such reflected pulses into a respective next time period. This will allow a more robust performance when the target object is adjacent to a further reflected object such as a mirror, a glass, a retroreflector or any other highly reflective surface.

The histogram may be organized with several bins, which preferably are of equal size. For example, a time distance between neighboring bins corresponds to a value of variation for the time periods between the trigger pulses. For example, if the time period is changed by one of such time distances, a detected aliased received pulse will be sorted into one of the neighboring bins with respect to the previous aliased received pulse. Reflected pulses of an actual target object within the maximum distance will be sorted into the same bin in any case.

In various implementations the sensor arrangement, for example within the control unit, comprises a programmable delay unit that is fed with a reference clock signal, preferably having a fixed clock period. The control unit is adapted to program a delay of the delay unit, after which the clock pulses of the reference clock signal at the input of the delay unit appear at the delay unit's output. In this way the control unit can generate the control signal from the reference clock signal with a varied clock period. For example, the control unit may be configured to program the delay unit for a variation of time periods between the subsequent trigger pulses based on control values provided by at least one of the following: an up/down counter, a pseudorandom period generator, a lookup table. Hence, for example, the effective clock period of the control signal, i.e. the time periods between the trigger pulses can be increased or decreased step-by-step, selected randomly or according to a predefined sequence stored in the lookup table.

For example, the delay unit is implemented as a programmable delay line being configured to output the control signal with the sequence of trigger pulses, based on the reference clock signal.

The control unit may be configured to program the delay line or the delay unit with a different delay time for successional clock pulses of the reference clock signal.

In alternative implementations, the sensor arrangement comprises a spread spectrum oscillator, SSO. The control unit is configured for for generating the control signal based on a clock signal provided by the SSO.

The electromagnetic radiation may for example be light, for example visible light or infrared light.

According to some implementations of the sensor arrangement, the emitter is implemented as a light emitting diode, LED, or as a laser, in particular a laser diode, for example a vertical-cavity surface-emitting laser, VCSEL.

According to some implementations of the sensor arrangement, the processing circuit or components of the processing circuit are comprised by a custom state machine or by a CPU.

According to some implementations of the sensor arrangement, the detector comprises a photonic demodulator. The photonic demodulator may be implemented as a photonic mixer device, PMD, a current assisted photonic demodulator, CAPD, a lateral drift-field photodetector, LDPD or another photonic mixer device with two or more detectors or collectors.

According to some implementations of the sensor arrangement, the detector comprises a single photon avalanche diode, SPAD, or an array of SPADs

The LED or the VCSEL, respectively, are configured to emit the respective pulse of electromagnetic radiation in response to each of the trigger pulses.

In various implementations of the sensor arrangement, the measurement block comprises at least one time-to-digital converter, TDC, for determining the respective difference values. For example, the TDC is started each time a sending pulse is emitted by the emitter, and is stopped when a received pulse is detected. Using more than one TDC may bring the effect that more reflected pulses can be detected respectively measured independently from each other. This can be useful if multiple pulses hit the detector during a short time interval.

In some implementations the sensor arrangement further comprises a feedback mechanism with a reference detector for determining an emission time instant of an emission of one of the sending pulses. For example, the sensor arrangement may comprise a beam splitter which directs a portion of the sending pulse back to a reference detector or feedback detector that is configured to detect this pulse of electromagnetic radiation and to generate a starting pulse in response thereto. That starting pulse triggers the beginning of the measurement period in the at least one TDC. Accordingly, the detector, which may also be called a measurement detector, can be configured for determining reception time instants of detection of the received pulses, which are also provided to the TDC or measurement block for indicating the end of the measurement period. Hence, these values represent the time period between one of the sending pulses and one of the received pulses resulting in the respective difference value.

According to the improved concept a method for determining a time-of-flight of electromagnetic radiation is also provided. The method comprises emitting a plurality of sending pulses of electromagnetic radiation in response to respective trigger pulses of a control signal, and detecting received pulses of electromagnetic radiation. The method further comprises determining respective difference values representative of a time period between one of the sending pulses and one of the received pulses and accumulating the difference values in a histogram. According to the method an output signal is generated being indicative of the time-of-flight based on evaluation of the histogram. The control signal is generated with a sequence of trigger pulses, wherein the sequence of trigger pulses comprises a first trigger pulse and a plurality of subsequent trigger pulses wherein, for each of the subsequent trigger pulses a time period between respective preceding trigger pulse and said trigger pulse is different from a further time period between said trigger pulse and a respective succeeding trigger pulse.

As described above for the various implementations of the sensor arrangement, a variation of time periods between subsequent trigger pulses may be performed by respectively programming a delay unit, in particular a delay line, in particular a programmable delay line and/or a delay locked loop circuit. The programming can be performed based on control values provided by an up/down counter or a pseudorandom period generator or a lookup table, to name only a few examples. The control signal may also be generated based on a clock signal provided by a spread spectrum oscillator.

Further implementations of the method are readily derived from the various implementations and embodiments of the sensor arrangement and vice versa.

In the following, the improved concept is explained in detail with the aid of exemplary implementations by reference to the drawings. Components that are functionally identical or have an identical effect may be denoted by identical references. Identical components and/or components with identical effects may be described only with respect to the figure where they occur first and the description is not necessarily repeated in subsequent figures.

In the drawings:
- Figure 1: shows an example implementation of a sensor arrangement according to the improved concept;
- Figure 2: shows a schematic example of a measurement process;
- Figure 3: shows an example of a signal time diagram for a measurement according to the improved concept;
- Figure 4: shows a further example implementation of a sensor arrangement according to the improved concept;
- Figure 5: shows an example implementation of a delay line for implementation in a sensor arrangement according to the improved concept; and
- Figure 6: shows a further example implementation of a sensor arrangement according to the improved concept.

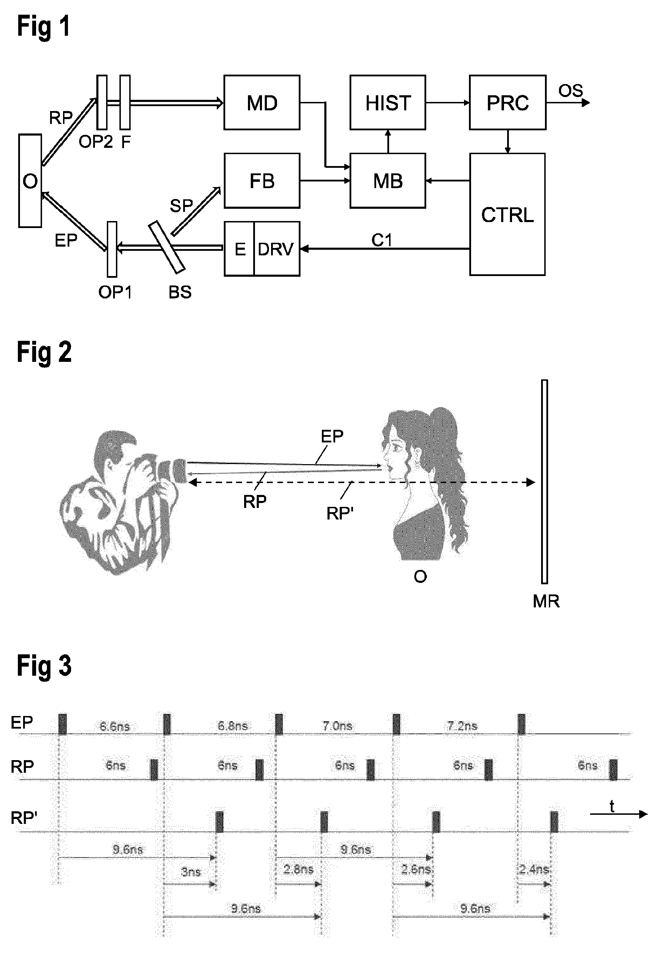

Figure 1 shows an example implementation of a sensor arrangement according to the improved concept. The sensor arrangement comprises an emitter E and a driver DRV coupled to the emitter E. The sensor arrangement further comprises a detector MD acting as a measurement detector. The sensor arrangement further comprises a reference detector FD which is coupled to the measurement block MB. An output of the detector MD is coupled to a measurement block MB. The sensor arrangement further comprises a histogram that is coupled to the measurement block MB and to a processing circuit PRC. A control unit CTRL is connected to the processing circuit PRC and the measurement block MB and provides a control signal C1 to the driver DRV respectively the emitter E.

Figure 1 further shows a beam splitter BS, a first and a second optical element OP1, OP2 and a filter element F, which are only optional components of the sensor arrangement. In particular, the latter elements may be provided external to the sensor arrangement. Finally, Figure 1 shows an external object O, which is not comprised by the sensor arrangement.

The driver DRV is, for example, configured to drive the emitter E depending on the control signal C1. In particular, the emitter E is configured to emit a sensing pulse of electromagnetic radiation in response to a respective trigger pulse of the control signal. Preferably, the emitter emits one sending pulse for each trigger pulse in the control signal C1. The electromagnetic radiation is for example light, in particular visible light or infrared light. The sending pulses are guided through the beam splitter BS and the first optical element OP1 as emitted pulses EP, which for example may hit the external object O and may be at least partially reflected from the external object O, resulting in corresponding reflected pulses RP. The reflected pulses RP are for example detected by the measurement detector MD after being guided through the second optical element OP2 and the filter F.

The optional optical elements OP1 and OP1 may be used to focus the light onto the target O and/or focus light received from the target O onto the detector MD. The filter element F may limit the electromagnetic radiation respectively light received to the same bandwidth as the electromagnetic radiation respectively light transmitted.

The emitter E may be implemented as a light-emitting diode, LED, or as a laser, in particular a laser diode, for example a vertical cavity surface emitting laser, VCSEL. The detector MD may comprise a SPAD or an array of SPADs. As an alternative, the detector MD may be implemented with a photonic demodulator, which may be incorporated by a photonic mixer device, PMD, a current assisted photonic demodulator, CAPD, a lateral drift field photodetector, LDPD, or another photonic mixer device.

Through the beam splitter BS a portion of the sending pulse may be coupled out and directed to the reference detector FD as a starting pulse SP, indicating optically a time instant of the emission of the sending pulse respectively the emitted pulse EP. Upon detection of the starting pulse SP the reference detector FD provides a start signal to the measurement block MB for starting the measurement of the time period between emitting and receiving a pulse. Consequently, the detector MD provides a stopping signal to a measurement block MB upon detection of a received pulse. The measurement block MB determines a respective difference value representative of a time period between the sending pulse and the received pulse.

It should be apparent to the skilled reader that the usage of starting and stopping signals is only one of several options possible for determining said time period. For example, a start could also be triggered by the respective trigger pulse of the control signal C1, for example.

The measurement block provides the determining difference values to the histogram block HIST for accumulating the difference values in a histogram. The processing circuit is configured to generate the output signal OS being indicative of the time-of-flight based on an evaluation of the histogram.

The control unit CTRL is configured to generate the control signal C1 with a sequence of trigger pulses. This sequence of trigger pulses comprises a first trigger pulse and a plurality of subsequent trigger pulses. According to the improved concept, the control signal C1 is generated such that for each of the subsequent trigger pulses a time period between a respective preceding trigger pulse and this trigger pulse is different from a further time period between this trigger pulse and a respective succeeding trigger pulse. Accordingly, the time period between succeeding trigger pulses varies within the control signal C1.

Figure 2 shows a schematic representation of a measurement process for determining a time-of-flight, respectively a distance related thereto. In this example, the sensor arrangement may be incorporated in a camera for measuring a distance between the camera and an object O, represented by a person in this example. Accordingly, a sending pulse of electromagnetic radiation is emitted as a pulse EP, reflected at the surface of the object O and returned to the sensor arrangement as a received pulse RP. The distance between the camera, respectively the sensor arrangement, and the object can be determined based on the time-of-flight of pulses EP, RP.

In various realistic situations an additional reflective surface may be present somewhere behind the object O, represented as a mirror MR in this example. Other kinds of reflective surfaces could be present as well, which is apparent to the skilled reader. Hence the sending pulse EP will cause an additional reflected pulse RP' to be reflected by MR and to be detected by the detector MB as well. If the additional pulse RP' is received after emission of the next sending pulse, an aliasing effect can occur, which will be described in conjunction with Figure 3 in the following. Figure 3 shows a signal time diagram with a series of five sending pulses EP, the associated reflected pulses RP reflected from the object O, and the additional reflected pulses RP' reflected from an additional reflecting surface like the mirror MR.

Only as an example, a pulse width of the pulses shown in Figure 3 is about 200 picoseconds, and a time-of-flight for a single emitted pulse and its reflected pulse RP has a constant value of 6 nanoseconds, corresponding to a distance between the sensor arrangement and the object O of 0.9 meters, employing the speed of light c for the pulses. As indicated in Figure 3, a time period between the first sending pulse and the subsequent sending pulses varies from 6.6 nanoseconds over 6.8 nanoseconds over 7.0 nanoseconds to 7.2 nanoseconds, hence is increased for every succeeding sending pulse. Referring back to Figure 1, this is achieved by respective trigger pulses in the control signal C1.

Referring back to Figure 3 again, it can be seen that the additional reflected pulses RP' do not return to the sensor arrangement, respectively the detector MD, before emission of the next sending pulse and have, obviously, a constant travelling time of 9.6 nanoseconds with respect to their original sending pulses, corresponding to a distance of the additional reflecting surface of 1.45 m. However, referring to the first one of the additional reflected pulses RP', this pulse is received 3 nanoseconds after the second sending pulse, which would correspond to a distance of 0.45 m, which is obviously not correct. It should be noted that with the emission of the second sending pulse, a new measurement period begins and the measurement block will determine a respective difference value representative of a time period between the second sending pulse and the first received pulse RP', but not with respect to the first sending pulse.

If a time period between the sending pulses EP remained constant, e.g. 6.6 nanoseconds, the measured time period between the subsequent sending pulse and the additional reflected pulse RP' would also remain constant at 3 nanoseconds in this example. However, due to the variation of the time periods between the sending pulses according to the improved concept, the measured difference value results in 3 nanoseconds for the first additional received pulse, 2.8 nanoseconds for the second additional received pulse, 2.6 nanoseconds for the third additional received pulse and 2.4 nanoseconds for the fourth additional received pulse.

As described for the implementation in Figure 1, the difference values determined in the measurement block MB are accumulated in a histogram in the histogram block HIST. Accordingly, in the present example, the five received pulses having a time value of 6 nanoseconds are sorted or accumulated in a single bin of the histogram, while each of the additional reflected pulses, respectively the determined difference values are sorted in separate bins, thus spreading the aliased results of the additional reflected pulses RP'. The processing circuit PRC can now evaluate the histogram and will find a higher count in the respective bin of the correct reflected pulses RP, but will neglect the spread bins of the additional reflected pulses RP'. Accordingly, the processing circuit may output a value of the bin corresponding to the 6 nanoseconds as an output signal. It is apparent that this value may be in a form of a time value, a calculated distance value or any other value that can be derived from the time value associated with the histogram bin.

In the example of Figure 3, only five sending pulses, respectively triggered by respective trigger pulses of a control signal C1, are used. However, a higher or lower number of trigger pulses, respectively sending pulses, could also be used. Additionally, also the timing between trigger pulses, respectively sending pulses, could be adapted, e.g. taking into account a desired maximum distance of distance measurements. Accordingly, all numbers and values in the diagram of Figure 3 are only to be taken as non-limiting examples.

It should also be noted that the stepwise increment of the time period between succeeding sending pulses is only one of several possible options to vary the time periods between the sending pulses. According to the improved concept it is an idea to implement such variation in order to spread potential aliased reflected pulses like the additional reflected pulses RP' in Figure 3, to different positions within the time frames, respectively to different bins of the histogram.

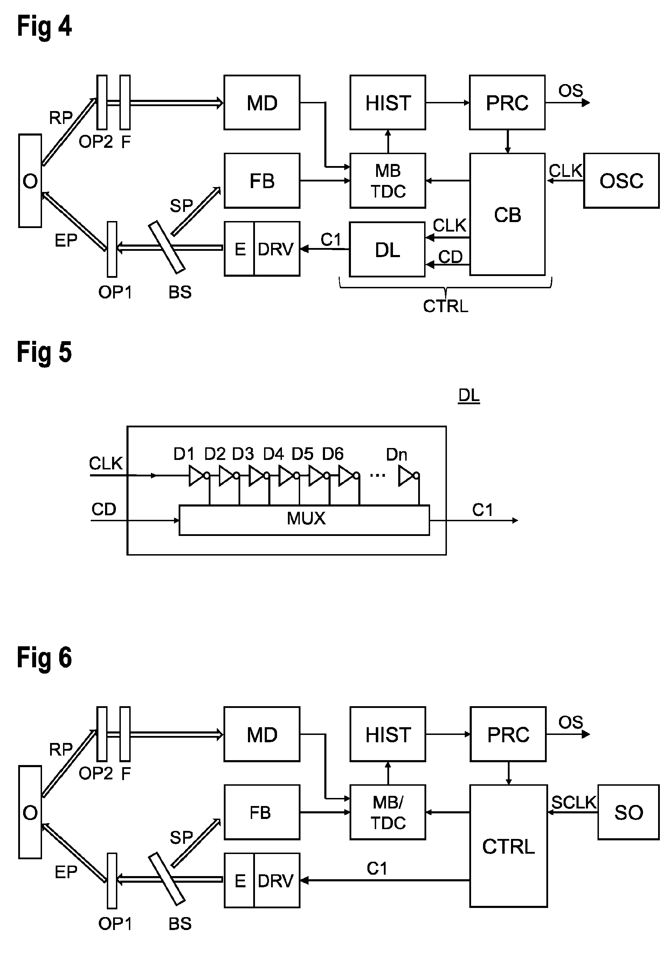

Various options for implementing the variation of the sending pulses will be described in the following in conjunction with Figure 4, Figure 5 and Figure 6.

Figure 4 shows a further example implementation of a sensor arrangement that is based on the example implementation of Figure 1. Hence, only the differences will be explained here in more detail.

For example, the measurement block may be implemented as or comprise a time-to-digital converter, TDC, which may consist of a string of inverters forming a delay line followed by a counter and a latch to latch the count when a detector event occurs, i.e. received pulse is detected. To measure the time-of-flight, the start time and stop time would be recorded by the TDC and the difference value resulting therefrom would be accumulated in a histogram in the histogram block HIST. The measurement block may also comprise more than one TDC.

The control unit CTRL comprises a control block CB and a delay element DL, which can be implemented as a delay line, in particular a programmable delay line. An oscillator OSC is provided in addition, for providing a reference clock signal CLK. The oscillator OSC may be internal or external to the sensor arrangement. The control block CB provides the reference clock signal CLK and a delay control signal to the delay element DL.

For example, the delay element, for example the delay line, takes the reference clock signal CLK as an input signal and outputs a delayed version of the clock signal as the control signal C1, wherein respective delays between the clock pulses respectively the trigger pulses of the control signal C1 are determined by the delay control signal CD. Control values for the delay control signal CD may be provided by an up counter, as employed in example of Figure 3, a down counter, a pseudorandom period generator for randomly determining the time periods between the trigger pulses, or a lookup table for providing a predetermined sequence of delay times, respectively time periods between the trigger pulses.

Figure 5 shows an example implementation of a delay element DL in the form of a programmable delay line, which can be used in the implementation of Figure 4.

The delay line DL comprises a plurality of n delay elements D1, D2, D3, D4, D5, D6, ..., Dn connected in series, wherein n is equal to or greater than two. A first delay element D1 of the n delay elements receives the first clock signal C1 at an input. At least some of the delay elements D1, D2, D3, D4, D5, D6, ..., Dn may for example be implemented as or comprise inverters. It is highlighted, that the depiction of seven or more delay elements in Figure 5 does not imply that n must be seven or more. In particular, additional delay elements are straightforwardly to be removed from the representation of Figure 5 in case the respective implementation of the delay line DL comprises less than seven delay elements.

The delay line DL further comprises a multiplexer MUX with at least n inputs connected to respective outputs of the n delay elements D1, D2, D3, D4, D5, D6, ..., Dn. The multiplexer has a control input for receiving the delay control signal CD.

Each of the delay elements D1, D2, D3, D4, D5, D6, ..., Dn may for example be configured to generate a respective intermediate clock signal by delaying a respective input signal by an intermediate delay. For example, the first delay element D1 may be configured to generate a first intermediate clock signal by delaying the reference clock signal CLK by the intermediate delay and supply the first intermediate clock signal to the multiplexer MUX. The second delay element D2 may be configured to generate a second intermediate clock signal by delaying the first intermediate clock signal by the intermediate clock signal and supply the second intermediate clock signal to the multiplexer MUX, and so forth.

Consequently, the first intermediate clock signal is for example delayed with respect to the reference clock signal CLK by the intermediate delay, the second intermediate clock signal is for example delayed by twice the intermediate delay and so forth. The n-th delay element Dn may be configured to generate an n-th intermediate clock signal by delaying the (n-1)-th intermediate clock signal by the intermediate delay and supply the n-th intermediate clock signal to the multiplexer MUX. Thus, the n-th intermediate clock signal is delayed with respect to the reference clock signal CLK by n times the intermediate delay.

The multiplexer MUX is for example configured to generate the control signal C1 by selecting one of the at least two intermediate clock signals depending on the delay control signal CD. In particular, the delay control signal CD may indicate an index i being an integer number which is at least one and smaller or equal to n. The multiplexer MUX is for example configured to select the one of the intermediate clock signals being delayed with respect to the reference clock signal CLK by i times the intermediate delay. The delay of the control signal C1 with respect to the reference clock signal CLK is then given by i times the intermediate delay.

Figure 6 shows a further example implementation of a sensor arrangement that is also based on the implementation of Figure 1. Also here only the differences with respect to Figure 1 will be explained in more detail.

As described for the implementation in Figure 4, the measurement block MB may be implemented with one or more time-to-digital converters. For such implementation, it is referred to the respective description above.

In the implementation of Figure 6, the control unit CTRL receives a spread spectrum clock signal SCLK from a spread spectrum oscillator SSO, SO. For example, a conventional SSO circuit could be used that is configured with adapted design parameters in order to deliver the spread spectrum clock signal SCLK adapted to the desired use of the sensor arrangement. For example, desired repetition times respectively maximum distances of the sensor arrangement should be achievable with the spread spectrum clock signal SCLK. The control unit CTRL then generates the control signal C1 with the respective trigger pulses on the basis of the clock signal SCLK.

In the various examples and example implementations according to the improved concept, time periods between sending pulses, respectively trigger pulses, are varied for consecutive pulses. Such variation has the effect that reflections of pulses from objects that are outside a maximum measurement range that would cause alias effects in the measurement can be suppressed due to spreading their timing effects in the detection process. Hence, the improved concept provides anti-aliasing to the measurement of time-of-flight based on multiple electromagnetic pulses.

Additionally, due to the variation of the time periods, also the frequency spectrum of the emitted pulses is spread, having the effect that the electromagnetic interference, EMI; is reduced.

## Claims

1. A sensor arrangement for determining a time-of-flight of electromagnetic radiation comprising
- an emitter (E) configured to emit a plurality of sending pulses of electromagnetic radiation in response to respective trigger pulses of a control signal (C1);
- a detector (MD) configured to detect received pulses of electromagnetic radiation;
- a measurement block (MB) configured to determine respective difference values representative of a time period between one of the sending pulses and one of the received pulses;
- a histogram block (HIST) configured to accumulate the difference values in a histogram;
- a processing circuit (PRC) configured to generate an output signal (OS) being indicative of the time-of-flight based on an evaluation of the histogram; and
- a control unit (CTRL) configured to generate the control signal (C1) with a sequence of trigger pulses, wherein the sequence of trigger pulses comprises a first trigger pulse and a plurality of subsequent trigger pulses, and wherein for each of the subsequent trigger pulses a time period between a respective preceding trigger pulse and said trigger pulse is different from a further time period between said trigger pulse and a respective succeeding trigger pulse.

2. The sensor arrangement according to claim 1,
wherein the control unit (CTRL) comprises a programmable delay line (DL) being configured to output the control signal (C1) with the sequence of trigger pulses, the delay line (DL) being provided with a reference clock signal (CLK).

3. The sensor arrangement according to claim 2,
wherein the control unit (CTRL) is configured to program the delay line (DL) with a different delay time for successional clock pulses of the reference clock signal (CLK).

4. The sensor arrangement according to claim 2 or 3, wherein the control unit (CTRL) is configured to program the delay line (DL) for a variation of time periods between the subsequent trigger pulses based on control values provided by at least one of the following:
- an up/down counter;
- a pseudo random period generator;
- a lookup table.

5. The sensor arrangement according to claim 1,
further comprising a spread spectrum oscillator, SSO, (SO), wherein the control unit (CTRL) is configured for generating the control signal (C1) based on a clock signal (SCLK) provided by the SSO (SO).

6. The sensor arrangement according to one of claims 1 to 5, wherein the detector (MD) comprises a single-photon avalanche diode, SPAD, or an array of SPADs.

7. The sensor arrangement according to one of claims 1 to 5, wherein the detector (MD) comprises a current assisted photonic demodulator, CAPD, or a photonic mixer device, PMD, or another photonic demodulator.

8. The sensor arrangement according to one of claims 1 to 7, wherein the emitter (E) comprises a laser driver or a vertical-cavity surface-emitting laser, VCSEL, respectively configured to emit a respective pulse of electromagnetic radiation in response to each of the trigger pulses.

9. The sensor arrangement according to one of claims 1 to 8, wherein the measurement block (MB) comprises at least one time-to-digital converter, TDC, for determining the respective difference values.

10. The sensor arrangement according to one of claims 1 to 9, further comprising a feedback mechanism with a reference detector (FB) for determining an emission time instant of an emission of one of the sending pulses.

11. The sensor arrangement according to claim 10,
wherein the detector (MD) is configured for determining reception time instants of detection of the received pulses, and wherein the emission time instant and the reception time instants are provided to the measurement block (MB).

12. A method for determining a time-of-flight of electromagnetic radiation, the method comprising
- emitting a plurality of sending pulses of electromagnetic radiation in response to respective trigger pulses of a control signal (C1);
- detecting received pulses of electromagnetic radiation;
- determining respective difference values representative of a time period between one of the sending pulses and one of the received pulses;
- accumulating the difference values in a histogram;
- generating an output signal (OS) being indicative of the time-of-flight based on an evaluation of the histogram; and
- generating the control signal (C1) with a sequence of trigger pulses, wherein the sequence of trigger pulses comprises a first trigger pulse and a plurality of subsequent trigger pulses, and wherein for each of the subsequent trigger pulses a time period between a respective preceding trigger pulse and said trigger pulse is different from a further time period between said trigger pulse and a respective succeeding trigger pulse.

13. The method according to claim 12,
wherein generating the control signal (C1) comprises programming a delay line (DL), which is configured to output the control signal (C1) with the sequence of trigger pulses depending on a reference clock signal (CLK), with a different delay time for successional clock pulses of the reference clock signal (CLK).

14. The method according to claim 13,
wherein programming the delay line (DL) comprises a variation of time periods between the subsequent trigger pulses based on control values provided by at least one of the following:
- an up/down counter;
- a pseudo random period generator;
- a lookup table.

15. The method according to claim 12,
wherein generating the control signal (C1) is based on a clock signal (SCLK) provided by a spread spectrum oscillator, SSO.
